# EUROPEAN PATENT APPLICATION

(11) **EP 4 424 728 A1**
(43) Date of publication of application: **04.09.2024**
(21) Application number: 23159759.2
(22) Date of filing: 02.03.2023
(51) Int. Cl.: C08F 220/14, C08L 33/12

(54) **CHEMICAL RESISTANT PMMA ALLOYS**

(71) Applicant: Trinseo Europe GmbH, 8808 Pfaeffikon (CH)
(72) Inventor: GE, Jiaxin Jason, 8808 Pfaeffikon (CH); VU, Huyen, 8808 Pfaeffikon (CH)
(74) Representative: SSM Sandmair

(57) **Abstract**

The invention relates to a polymer alloy composition having a high flow rate, high heat resistance, and excellent chemical resistance. The polymer alloy contains a high molecular weight, hydrophobic acrylic polymer blended with a styrene-acrylonitrile (SAN) or acrylonitrile-styrene-acrylate (ASA) copolymer, and preferably with another high molecular weight (meth)acrylic polymer. The alloy is especially useful for automotive LED lenses and medical devices.

## Description

### FIELD OF THE INVENTION

The invention relates to a polymer alloy composition having a high flow rate, high heat resistance, and excellent chemical resistance. The polymer alloy contains a high molecular weight, and/or hydrophobic acrylic polymer blended with a styrene-acrylonitrile copolymer. The alloy is especially useful for automotive LED lenses and medical devices.

### BACKGROUND OF THE INVENTION

Thermoplastic polymers and copolymers, especially (meth)acrylic polymers, have excellent characteristics such as transparency, mechanical properties and processability, and are widely used in various fields such as automobile parts, electrical parts, industrial parts, optical materials, various parts of household electrical appliances, aesthetical parts, miscellaneous goods and the like.

High Tg acrylic polymers are useful in applications requiring a high optical clarity and high heat resistance, such as automotive front inner lenses, thin wall parts, lighting pipes, optical protection/retardation films in electronic devices, solar panels/films, cell phone back covers, home appliance, composites, and others. It is expected the market for high heat acrylic copolymers in automotive LED front inner lenses and thin wall parts will rapidly increase. In addition, high heat acrylic films are used in LED/OLED displays.

High Tg acrylic copolymers, such as methyl methacrylate/methacrylic acid copolymer are described in US 2018-0362688. High molecular weight hydrophobic poly(meth)acrylate copolymers are described in US 2022-0177622 and US 2002-0356281.

There are problems associated with insufficient chemical resistance in pMMA articles, along with high melt flow, for thin wall lenses in automotive, as well as medical device (e.g. cuvette, microfluidic parts) applications. There is a need for improvement of chemical resistance, yet a desire to maintain sufficiently high Vicat softening temperatures of at least 103°C under 50N and a sufficiently high spiral flow distance.

Surprisingly, when new-generation hydrophobic pMMA copolymers were incorporated into standard pMMA and/or pMMA/SAN blends, significant improvement in chemical resistance to common polar organic solvents (such as ethanol, and isopropyl alcohol (IPA)) was observed, compared to standard controls alone.

### SUMMARY OF THE INVENTION

The present invention demonstrates that an alloy of high Tg, hydrophobic acrylic copolymers with styrene-acrylonitrile copolymers provides a high flow rate, high heat resistance, and excellent chemical resistance (to ethanol, IPA, ethanol/water, IPA/water), Additionally, these alloys produced high light transmission (>91%) and low haze (<=2%) in 3.2mm molded plaques. In addition, sufficient high heat resistance in terms of Vicat softening temperature under 50N was also achieved at greater than 100°C, and even higher than 102°C.

Further improvement was seen in the desired properties when standard high molecular weight acrylic copolymers were added to the alloy. It was found that compositions having hydrophobic pMMA, high MW pMMA, and SAN provide a better chemical resistance (to ethanol) compared to pMMA compositions without SAN or without the high MW pMMA, without significant loss of high optical performance/clarity (w. high LT>90% and haze <3%).

The new hydrophobic pMMA alloys may be used to form lighting pipes, thin wall parts, optical front thin lenses, interior thin lenses, (co-)extruded sheets, window profiles, railing and decking, thermo-formable sheets, medical devices, optical films, electronic components, etc. This unique hydrophobic technical solution can be used in automotive, electronics, medical devices, electric vehicle (EV) charging stations, films in signage, building and constructions, solar panel back sheets, and other applications in terms of high heat resistant and chemical resistant pMMA products.

While not being bound by any particular theory, it is believed that the hydrophobic pMMA copolymers function as a molecular compatibilizer to further improve the compatibility between standard pMMA and hydrophobic SAN at a very small scale, perhaps even at the nanometer scale.

### DETAILED DESCRIPTION OF THE INVENTION

"Copolymer" is used to mean a polymer having two or more different monomer units, including copolymers, and polymers with three or more different monomers, such as terpolymers and tetrapolymers. Accordingly, the terms "co-, ter- and tetra-polymer" encompass any polymer having more than one type of comonomer. "Polymer" is used to mean both homopolymer and copolymers. Polymers may be straight chain, branched, star, comb, block, or any other structure. The polymers may be homogeneous, heterogeneous, and may have a gradient distribution of co-monomer units. All references cited are incorporated herein by reference. As used herein, unless otherwise described, percent shall mean weight percent. Molecular weight is a weight average molecular weight as measured by gel permeation chromatography (GPC) using polymethylmethacrylate standards. In cases where the polymer contains some cross-linking, and GPC cannot be applied due to an insoluble polymer fraction, soluble fraction / gel fraction or soluble faction molecular weight after extraction from gel is used to determine weight average molecular weight.

By "hydrophobic" as used herein means that pMMA copolymers contain at least 0.2 weight. % of tert-butyl cyclohexyl (meth)acrylate and/or 3,3,5-trimethyl cyclohexyl (meth)acrylate hydrophobic monomer units.

By "(meth)acrylic" or "(meth)acrylate" as used herein denotes both the acrylate and the methacrylate. By "acrylic polymer" as used herein is meant polymers based primarily on (meth)acrylic monomer units.

In one embodiment, the hydrophobic copolymer of the invention passes an 85°C/85%RH test. In another embodiment, the hydrophobic copolymer of the invention passes a -40°C to 80°C/85%RH humidity freeze cycling test. The inventors have prepared alloys containing hydrophobic PMMA copolymers with styrene-acrylonitrile containing copolymers to obtain an alloy having a high light transmission, high flow rate, high heat resistance, and excellent chemical resistance. The properties are further improved by adding high molecular weight pMMA to the alloy.

### Hydrophobic high Tg copolymers or terpolymers

"High Tg monomer" refers to a monomer, that when polymerized produces a polymer having a Tg of greater than 116°C, and preferably greater than 120°C, and more preferably of greater than 130°C. Examples of useful hydrophobic, high Tg monomers include, but are not limited to, tert-butyl cyclohexyl methacrylate as a specific blend range of trans/cis isomers, and 3,3,5-trimethylcyclohexyl(meth)acrylate, and its isomer blends.

The hydrophobic, high Tg monomers are polymerized with methyl methacrylate, and optionally other acrylic monomers, to form the hydrophobic, high Tg copolymers and terpolymers of the inventive alloy. The alloy of the invention contains from 5 to 99.8, preferably 10 to 80, and more preferably from 15 to 50 weight percent of the hydrophobic high Tg copolymer or terpolymer.

The hydrophobic high Tg copolymer or terpolymer contains 0.1 to 20, preferably 0.3 to 10, and more preferably from 0.5 to 5 weight percent of the hydrophobic monomer.

### Tert-butyl cyclohexyl methacrylate

Tert-butyl cyclohexyl (meth)acrylate has the structural formulas below:

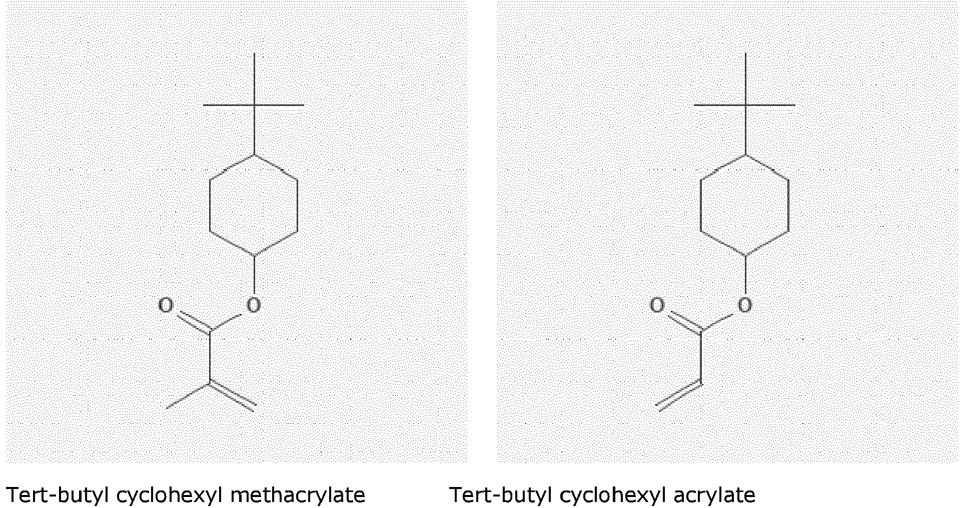

The monomer is a mixture of the cis- and trans- forms, having a trans/cis ratio of between 99.8/0.2 and 85/15, preferably 60/40 to 80/20, and more preferably 50/50 to 75/25.

The level of tert-butyl cyclohexyl (meth)acrylate in the final copolymer generally ranges from 0.2 - 20 weight percent, and more preferably from 0.5 to 10 weight percent of tert-butyl cyclohexyl methacrylate is used in the copolymer. It has been found that as little as 1 weight percent, and even 0.5 weight percent of tert-butyl cyclohexyl methacrylate, provides a copolymer having a hydrophobic character. The Tg of the copolymer of the invention is from 116°C to 135°C.

### 3,3,5-trimethylcyctohexyl(meth)acrylate

3,3,5-trimethylcyclohexyl(meth)acrylate has the structural formulas below:
The monomer is a mixture of the cis- and trans- forms.

The level of 3,3,5-trimethylcyclohexyl(meth)acrylate in the final copolymer generally ranges from 0.2 - 20 weight percent, and more preferably from 0.5 to 10 weight percent of tert-butyl cyclohexyl methacrylate is used in the copolymer. It has been found that as little as 1 weight percent, and even 0.5 weight percent of tert-butyl cyclohexyl methacrylate, provides a copolymer having a hydrophobic character. The Tg of the copolymer of the invention is from 116°C to 135°C.

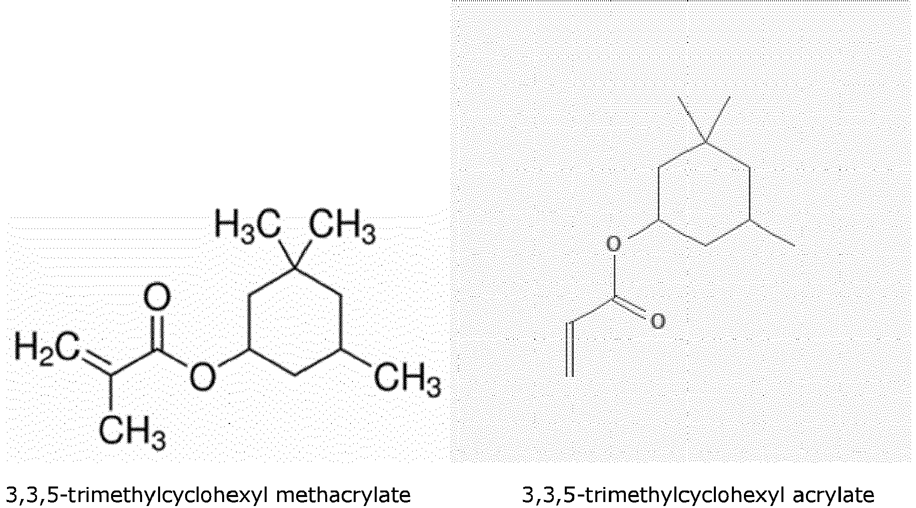

The level of tert-butyl cyclohexyl methacrylate or 3,3,5-trimethylcyclohexyl methacrylate in the final copolymer generally ranges from 0.2 - 20 weight percent, and more preferably from 0.5 to 10 weight percent based on the total monomer units in the copolymer. It has been found that as little as 1 weight percent, and even 0.5 weight percent of tert-butyl cyclohexyl methacrylate, provides a copolymer having a hydrophobic character. The Tg of the copolymer of the invention is from 116°C to 140°C.

### Acrylic monomers, MMA

One or more of the hydrophobic, high Tg monomers, is copolymerized with one or more other monomers. In a preferred embodiment of the invention the copolymer contains at least 50 weight percent of methyl methacrylate monomer units, preferably at least 70 weight percent and more preferably at least 80 weight percent methyl methacrylate monomer units make up the copolymer.

The copolymer of the invention, in addition to the hydrophobic, high Tg monomer(s), and methyl methacrylate, may include 0 to 49.5 weight percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. (Meth) acrylic acids such as methacrylic acid and acrylic acid can be useful for the monomer mixture. In addition to carboxyl functionality, other functionality can be added to the high molecular weight acrylic process aid through functional comonomers, including epoxy (such as glycidyl methacrylate), hydroxyl, and anhydride functional groups. Functional monomer units (monomer units having a functional group) can be present at up to 70 weight percent of the acrylic polymer, preferably up to 50 weight percent.

In a preferred embodiment, the acrylic copolymer has a high Tg of greater than 115°C, more preferably greater than 120°C, greater than 125°C, greater than 130°C, greater than 135°C, and even greater than 140°C. In addition to the tert-butyl cyclohexyl methacrylate and 3,3,5-trimethylcyclohexyl(meth)acrylate, other high Tg monomers may optionally be present at levels of 0 to 25 weight percent, and more preferably from 0 to 10 weight percent. The other high Tg monomers may be hydrophilic, hydrophobic or have a neutral character, and include, but are not limited to methacrylic acid, acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide.

In one embodiment, a terpolymer of MMA/methacrylic acid and 3,3,5-trimethylcyclohexyl (meth)acrylate provides a useful terpolymer.

In one embodiment it was found that the hydrophobic effect of the tert-butyl cyclohexyl methacrylate and/or 3,3,5-trimethylcyclohexyl(meth)acrylate is strong enough to overcome the hydrophilic effect of hydrophilic comonomers used at lower levels, to produce an over-all hydrophobic copolymer.

The weight average molecular weight of the hydrophobic high heat pMMA copolymers in polymer blends is higher than 70,000 g/mole, preferably higher than 80,000 g/mole, more preferably higher than 90,000 g/mole. Increasing the molecular weight of the hydrophobic pMMA copolymer increases chemical resistance.

The hydrophobic copolymers of the invention are obtained through melt polymerization, including but not limited to solution polymerization, emulsion polymerization, and suspension polymerization.

### High molecular weight acrylic polymers

Optionally, and preferably, one or more acrylic polymers are blended into the alloy composition of the invention. In a preferred embodiment of the invention the copolymer contains at least 50 weight percent of methyl methacrylate monomer units, preferably at least 70 weight percent and more preferably at least 80 weight percent methylmethacrylate monomer units make up the copolymer. Other monomers polymerizable with methyl methacrylate, include those listed above as acrylic comonomers.

The acrylic polymer used in the alloy has a weight average molecular weight higher than 70,000 g/mole, preferably higher than 80,000 g/mole, preferably higher than 90,000 g/mole, more preferably higher than 100,000 g/mole. Increasing the molecular weight results in an increase in chemical resistance.

### Acrylonitrile, Styrene copolymers

The alloy compositions of the invention contain from 0.2 to 30 weight percent of one or more copolymers containing acrylonitrile and styrene monomer units. Useful copolymers include, but are not limited to, styrene/acrylonitrile (SAN) and acrylonitrile/styrene/acrylate (ASA) copolymers.

The acrylonitrile, styrene copolymer contains from 15 to 50 weight percent of acrylonitrile units, preferably from 20-40 weight percent.

The acrylonitrile, styrene copolymers of the invention are used at from 0.2 to 30 weight percent, based on the weight of the alloy.

To avoid outdoor yellowing issues, 1-20 wt. %, preferably 1-10wt%, more preferably 1-7 wt.% of the SAN or ASA copolymer is present in alloy blends. For indoor applications, such as medical devices, higher levels of SAN or ASA copolymer may be used to make products more cost effective along with providing better chemical resistance.

The weight average molecular weight of the acrylonitrile, styrene copolymer is greater than 150,000 g/mole, preferably greater than 175,000 g/mole, and more preferably greater than 200,000 g/mole.

### Additives

The alloy of the invention can be blended with typical additives used in thermoplastics. These include, but are not limited to fillers, surface modifying additives, processing aids, fibers, lubricant agents, matting agents, heat stabilizers, flame retardants, synergists, matting agents, pigments or coloring agents.

Examples of matting agents include, but are not limited to, cross-linked polymer particles of various geometries. The amount of filler and additives included in the polymer compositions may vary from about 0.01% to about 70% of the combined weight of polymer, additives and filler. Generally, amounts from about 5% to about 45%, from about 10% to about 40%, are included.

### Impact modifiers

Impact modifiers may be incorporated into the alloy of the invention. Suitable impact modifiers may comprise, consist of, or consist essentially of a core-shell impact modifier. In addition, acrylic impact modifiers (such as MPD80HF or MPD85T from Trinseo Altuglas, and small impact modifiers-SIMs) may be added to the inventive copolymer or compositions including it to provide impact-resistant pMMA resins that are hydrophobic and have high heat performance to improve water resistance and high heat resistance. The impact modified composition may include from 5 to 50 weight%, preferably 10 to 48 weight%, more preferably 20 to 45 weight% of impact modifier, based on total weight of the composition including the impact modifier and the inventive copolymer. The impact modifier may comprise, consist of or consist essentially of at least one of a core-shell impact modifier, an acrylic block copolymer, or a self-assembling, nanostructured polymer, or any combination thereof.

### Blends with other polymers

Other polymers may be blended with the inventive copolymers. For example, poly(methyl (meth)acrylate)/ethyl(meth)acrylate) copolymer; poly(methyl methacrylate)/methacrylate copolymer, polyvinylidene fluoride, copolymers of vinylidene fluoride and hexafluoropropene; polylactic acid; and combinations thereof maybe blended with the inventive alloy to provide a polymer composition.

### Antioxidants

In one embodiment, selected antioxidants may be used to improve the thermal stability of the alloy at high temperature such as 255-275°C and reduce the yellowing at high temperature. The loading of the antioxidants in the final alloy composition are at the levels of ~50 ppm to 3500 ppm, preferably about 100 ppm to about 2500 ppm based on the total weight of the composition. Non-limiting examples of useful antioxidants include sterically hindered phenols, organophosphites hindered amine light stabilizers (HALS), benzotriazoles, triazines, benzophenones, and cyanoacrylates. For example, the copolymer may include 100 to 2000 ppm weight or 2500 ppm weight of antioxidant comprising at least one of hydroxy phenyl benzotriazoles, sterically hindered phenolics, organo-phosphites, hindered amines, and combinations thereof. These antioxidants are used to improve the thermal stability of the resins at high temperature such as from 255°C to 275°C and to reduce the yellowing at high temperature. The loading levels of the antioxidants in the final resin formulations are in the range of from 100 ppm to 2000 ppm weight, or 150ppm to 1900 ppm, or 200 ppm to 1800 ppm or 150 ppm to 1500 ppm, or 100 ppm to 1000 ppm weight.

### Applications

The alloys of the invention are thermoplastic, and can be easily shaped into sheets, films, light pipe and lenses.

The excellent heat stability, chemical resistance, high molecular weight, moisture resistance and excellent optical properties, makes the alloys of the invention especially useful for forming lighting pipes, thin wall parts, optical front think lenses, interior thin lenses, (co-)extruded films, (co-)extruded sheets/profiles, thermo-formable sheets, cast sheets, composites, solar panel back sheets, window profiles, railing and decking, medical devices, optical films, electronic components, films in signage, building and constructions, etc. High heat acrylic films of the invention may be used in LED/OLED displays. If energy saving OLED technologies are widely used to replace LED/LCD technologies, the demand for new thin polarizers for OLED may increase compared to traditional polarizers for LCD/LED TVs.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Non-limiting aspects of the invention are summarized below.

### EXAMPLES

### Test Methods:

A. Melt flow rate (MFR) measurement: Instron Ceast MF30 equipment was used for polymers in melt flow rate measurements. The die temperature was controlled at 230°C while the loading cell weight was at 3.8kg. The dried pellets were used near 20°C below the T_{g} over 8 hours.
B. Gel permeation chromatography (GPC): Waters Alliance 2695 and Waters Differential Refractometer 2410 were used to make polymer molecular weight measurements. Columns were based on two PL Gel mixed C columns and a guard column (7.8 mm I.D. × 30 cm, 5 µm). THF (HPLC grade) was selected as a solvent. Temperature was controlled at 35 °C. Ten poly(methyl methacrylate) standards were used in the calibration, ranging in Mₚ (peak molecular weight) from 550 to 1,677,000 g/mole.
C. Differential scanning calorimetry (DSC): The glass transition temperatures of acrylic polymers were measured at a heating rate of 10°C/minutes in N₂ using TA instruments Q2000 DSC, during the second heating. The first heating was used to heat the sample to 170°C at a heating rate of 10°C/minute, then, the sample was cooled down to 0°C at a cooling rate of 10°C/minute. The sample weight was controlled at 5-10 mg.
D. Total light transmission: The total light transmission was measured from film and/or plaque samples in a transmission mode using Perkin Elmer Lambda 950 with a 150 mm integrating sphere. The selected UV/Vis wavelength range was from 200nm to 800nm in UV/Vis region.
E. Haze: Optical haze of clear film and/or plaque samples was measured using BYK HazeGard Plus under ASTM method D1003.
F. Refractive index: Refractive index of the polymer film was measured at three different wavelengths of 402nm, 518nm, and 636.5nm using an optical prism coupler Metricon 2010 from Metricon Inc while the refractive index was calculated at a selected wavelength of 589nm.
G. Tensile strength and elongation: The tensile strength, modulus and elongation of the tensile bars was evaluated using Instron Model 4202 at the crosshead speed of 5mm/minute using ASTM D638 method after being preconditioned at 23°C/48 hours. The tensile was at 6" in length while the width was at 0.50". The sample thickness was at 0.125".
H. NMR: Samples were prepared by dissolving ~200 mg of pellets in ~4 ml CDCl₃ in separate 10 mm NMR tubes for ¹³C NMR. The ¹H spectra were acquired on the Bruker AV III HD 500 (11.07 T) spectrometer with a 5 mm ¹H/¹⁹F/¹³C TXO probe at 25°C before and after derivatization of MAA. The ¹³C spectra were acquired on the Bruker AV 400 (9.4 T) with a 10 mm BBO probe at 50 °C.
I. Vicat softening temperatures: The samples were tested in Instron HV6M under 10N and 50N external forces using ASTM method D1525. The sample heating rate was controlled at the speed of 50°C/hour. The injection molded samples were annealed at ~20C below the Tg value for 16 hours and were kept in a desiccator oven before testing.
J. Spiral flow distance: The spiral flow distance was measured with the thickness of 3mm at the barrel temperature of 260°C under the injection molding pressure of 18.3 MPa, along with the screw speed of 25.4 mm/second.
K. Chemical resistance tests: The rupture failure time (seconds) of 4 mm thick ISO tensile bars was utilized in chemical resistance testing under a cantilever beam configuration. The surface constant stress was applied in the range of 20MPa-40MPa. The different organic solvents can be selected such as ethanol, isopropyl alcohol, methyl ethyl ketone, and others. The distance is controlled at 70cm between the applied weight and the fulcrum point. The filter paper soaked with a solvent (e.g. ethanol) was placed at the fulcrum point.
L. Average particle diameter: Core-shell impact modifiers dispersed in a diluted solution (0.1-0.2 wt%) are spin-coated onto a Si wafer substrate and dried at 70°C for 1hour. The samples were coated with a thin layer of iridium with an ion beam coater from Southbay Technologies (model IBSe), and imaged using a Hitachi SU8010 field emission SEM at various magnifications. Custom software was used for particle size analysis. The average diameter of impact modifier particles is determined, based on more than 200 of individual particles in SEM images, along with the median diameter. The volume average diameter of impact modifier particles is reported.

### Example 1. (synthesis example)

### (pMMA copolymer MW2204 containing 0.95% tert-butyl cyclohexyl methacrylate

This example demonstrates the preparation of a high molecular weight copolymer of methyl methacrylate and tert-butyl cyclohexyl methacrylate (having a 73% trans/27% cis isomer ratio). 9858.5 parts of methyl methacrylate and 100 parts of tert-butyl cyclohexyl methacrylate were charged into a reaction vessel near 0°C under N₂ with a mechanical stirring speed of 100rpm. In addition, Luperox^{®} 531 (from Arkema) was used as an initiator at a level of 2.0 parts while 38.5 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached higher than 50%, the residual monomers were removed through a venting system. The resulting polymer was passed through a single-screw extruder at a die temperature of 240°C while the barrel temperatures were at 225-245°C. The melt stream went through a water bath before pelletization. Then the copolymer was pelletized into 3-4mm long resin pellets and dried at 100°C in a desiccator oven for 8 hours. The melt flow rate of the polymer was measured to be 5.35 g/10minutes at 230°C under 3.8kg. The refractive index of the resulting polymer was measured at 1.491 at 589 nm.

The resulting polymer was confirmed using ¹H NMR to possess the composition of pMMA/ tert-butyl cyclohexyl methacrylate (99.05/0.95w/w). The syndiotacticity of the copolymer was determined at 51% from the chemical shift of 44.5ppm using ¹³C NMR while the isotaticity and atacticity were measured at 8% and 41% from 45.5ppm and 45.0ppm. The glass transition temperature of the resin was measured to be 115°C in N₂ using DSC at the heating rate of 10°C/minute. Vicat softening temperatures were detected at 116°C and 112°C under 10N and 50N after samples being annealed at 100°C for 16 hours. The weight average molecular weight Mw of the resin was measured as being 82,000 g/mole using GPC along with a Mw/Mn (polydispersity) value of 1.85. The light transmission from a 3.2mm plaque was measured to be 92.1% at 560 nm using Lambda 950 with a 150mm integrating sphere while the haze was measured to be 0.5% using a hazemeter (Haze Gard Plus from BYK). The tensile modulus of the test sample was at 3.2GPa while the tensile strength was at 75 MPa, along with the tensile elongation of 10%. The spiral flow distance of 108.9_cm was obtained with the thickness of 3mm at 260°C under molding pressure of 18.3 MPa. The rupture failure time of 3mm testing samples was measured to be 12 seconds under the constant surface stress of 38MPa with 99.99% ethanol.

### Example 2. (synthesis example)

### (pMMA copolymer MW2112 containing 3.88% tert-butyl cyclohexyl methacrylate).

This example demonstrates the preparation of a high molecular weight copolymer of methyl methacrylate and tert-butyl cyclohexyl methacrylate (having a 72% trans/28% cis isomer ratio). 9466 parts of methyl methacrylate and 400 parts of tert-butyl cyclohexyl methacrylate were charged into a reaction vessel near 0°C under N₂ with a mechanical stirring speed of 100rpm. In addition, Luperox^{®} 531 (from Arkema) was used as an initiator at a level of 1.6 parts while 35.3 parts of n-dodecyl mercaptan (n-DDM from Aldrich) was used as a chain transfer agent, along with 1.0 part of di-tert-dodecyl disulfide (DtDDS from Arkema). The polymerization reaction occurred at 160°C for 7 hours. When the conversion reached around 50%, the residual monomers were removed through a venting system. The resulting polymer was passed through a single-screw extruder at a die temperature of 240°C while the barrel temperatures were at 225-245°C. The melt stream went through a water bath before pelletization. Then the polymer was pelletized into 3-4mm long resin pellets and dried at 100°C in a desiccator oven for 8 hours. The melt flow rate of the polymer was measured to be 4.08 g/10minutes at 230°C under 3.8kg. The refractive index of the resulting polymer was measured at 1.490 at 589 nm.

The resulting polymer was confirmed using ¹H NMR to possess the composition of pMMA/ tert-butyl cyclohexyl methacrylate (96.12/3.88w/w). The syndiotacticity of the copolymer was determined at 50% from the chemical shift of 44.5ppm using ¹³C NMR while the isotaticity and atacticity were measured at 8% and 42% from 45.5ppm and 45.0ppm. The glass transition temperature of the resin was measured to be 116°C in N₂ using DSC at the heating rate of 10°C/minute while the Vicat temperature was detected at 114°C and 108°C under 10N and 50N. The weight average molecular weight Mw of the resin was measured as being 85,000 g/mole using GPC along with a Mw/Mn (polydispersity) value of 2.1. The light transmission from a 3.2mm plaque was measured to be 92.3% at 560 nm using Lambda 950 with a 150mm integrating sphere while the haze was measured to be 0.6% using a hazemeter (Haze Gard Plus from BYK). The tensile modulus of the test sample was at 3.2GPa while the tensile strength was at 73 MPa, along with a tensile elongation of 12%. The spiral flow distance of 106 cm was obtained with the thickness of 3mm at 260°C under molding pressure of 18.3 MPa. The rupture failure time of 3mm testing samples was measured to be 15 seconds under the constant surface stress of 38MPa with 99.99% ethanol.

### Example 3. (Alloy of hydrophobic pMMA/high molecular weight pMMA)

MW2009/20%Q-Clean: 20wt.% of Altuglas^{®} Q-clean pMMA resin was blended with 80wt.% of MW2009 hydrophobic pMMA copolymers through melt compounding at the die temperature of 210°C. Q-Clean was made from pMMA/ethyl acrylate (97/3 w/w) with the weight average molecular weight of 150,000 g/mole and its polydispersity (Mw/Mn) of 2.0. Altuglas MW2009 was made from the pMMA copolymer containing tert-butyl cyclohexyl methacrylate (99.0/1.0 w/w) with the weight average molecular weight of 85,000 g/mole and its polydispersity (Mw/Mn) of 1.89. The glass transition temperature of pMMA copolymer alloys was measured to be 116°C in N₂ using DSC at the heating rate of 10°C/minute while the Vicat temperature was detected at 117°C and 112°C under 10N and 50N, respectively. The weight average molecular weight Mw of the resin was measured as being 102,000 g/mole using GPC along with a Mw/Mn (polydispersity) value of 2.07. The light transmission from a 3.2mm plaque was measured to be 92.1% at 560 nm using Lambda 950 with a 150mm integrating sphere while the haze was measured to be 0.5% using a hazemeter (Haze Gard Plus from BYK). The tensile modulus of the test sample was at 3.2GPa while the tensile strength was at 76 MPa, along with a tensile elongation of 20%.

The melt flow rate of the polymer was measured to be 2.45 g/10minutes at 230°C under 3.8kg. The spiral flow distance of 102.7_cm was obtained with the thickness of 3mm at 260C under molding pressure of 18.3 MPa. The rupture failure time of 3mm testing samples was measured to be 40 seconds under the constant surface stress of 38MPa with 99.99% ethanol.

### Example 4. (Alloy of hydrophobic pMMA/high molecular weight pMMA)

MW2112/30%Q-Clean: 30wt.% of Altuglas^{®} Q-clean pMMA resin was blended with 70wt.% of MW2112 hydrophobic pMMA copolymers through melt compounding at the die temperature of 210°C. Q-Clean was made from pMMA/ethyl acrylate (97/3 w/w) with the weight average molecular weight of 150,000 g/mole and its polydispersity (Mw/Mn) of 2.0. Altuglas^{®} MW2112 was made from the pMMA copolymer containing tert-butyl cyclohexyl methacrylate (96.1/3.9 w/w) with the weight average molecular weight of 86,000 g/mole and its polydispersity (Mw/Mn) of 2.1. The glass transition temperature of pMMA copolymer alloys was measured to be 115°C in N₂ using DSC at the heating rate of 10°C/minute while the Vicat temperature was detected at 115°C and 111°C under 10N and 50N, respectively. The weight average molecular weight Mw of the resin was measured as being 117,000 g/mole using GPC along with a Mw/Mn (polydispersity) value of 2.46. The light transmission from a 3.2mm plaque was measured to be 92.1% at 560 nm using Lambda 950 with a 150mm integrating sphere while the haze was measured to be 0.8% using a hazemeter (Haze Gard Plus from BYK). The tensile modulus of the test sample was at 3.1GPa while the tensile strength was at 75 MPa, along with a tensile elongation of 16%.

The melt flow rate of the polymer was measured to be 2.27 g/10minutes at 230°C under 3.8kg. The spiral flow distance of 102.0_cm was obtained with the thickness of 3mm at 260°C under molding pressure of 18.3 MPa. The rupture failure time of 3mm testing samples was measured to be 55 seconds under the constant surface stress of 38MPa with 99.99% ethanol.

### Example 5. (Hydrophobic pMMA/SAN alloy)

MW2009/5%SAN: 95wt.% of Altuglas MW2009 pMMA resin was blended with 5wt.% of SAN hydrophobic copolymers through melt compounding at the die temperature of 210°C. MW2009 was made from pMMA/tert-butyl cyclohexyl methacrylate (99/1 w/w) copolymer with the weight average molecular weight of 85,000 g/mole and the polydispersity (Mw/Mn) of 1.89. SAN was made from poly(styrene-co-acrylonitrile (64/36 w/w) produced by Ineos, with the weight average molecular weight of 205,000 g/mole and its polydispersity (Mw/Mn) of 2.38. The glass transition temperature of pMMA/SAN alloys was measured to be 113°C in N₂ using DSC at the heating rate of 10°C/minute while the Vicat temperature was detected at 117°C and 113°C under 10N and 50N, respectively. The weight average molecular weight Mw of the resin was measured as being 99,000 g/mole using GPC along with a Mw/Mn (polydispersity) value of 1.92. The light transmission from a 3.2mm plaque was measured to be 90.6% at 560 nm using Lambda 950 with a 150mm integrating sphere while the haze was measured to be 0.9% using a hazemeter (Haze Gard Plus from BYK). The tensile modulus of the test sample was at 3.2GPa while the tensile strength was at 75 MPa, along with a tensile elongation of 8%.

The melt flow rate of the polymer was measured to be 4.51 g/10minutes at 230°C under 3.8kg. The spiral flow distance of 108.4_cm was obtained with the thickness of 3mm at 260°C under molding pressure of 18.3 MPa. The rupture failure time of 3mm testing samples was measured to be 18 seconds under the constant surface stress of 38MPa with 99.99% ethanol.

### Example 6. (alloy of hydrophobic pMMA copolymer, high molecular weight PMMA and SAN)

V045/MW2204/SAN: 65wt.% of Altuglas V045 pMMA resin was blended with 30wt.% MW2204 hydrophobic pMMA and 5wt% of SAN (from Ineos) copolymers through melt compounding at the die temperature of 210°C. Altuglas MW2204 was made from the pMMA copolymers containing tert-butyl cyclohexyl methacrylate (99.05/0.95 w/w), with the weight average molecular weight of 82,000 g/mole and its polydispersity (Mw/Mn) of 1.85. The glass transition temperature of pMMA copolymer alloys was measured to be 109°C in N₂ using DSC at the heating rate of 10°C/minute while the Vicat temperature was detected at 111°C and 106°C under 10N and 50N, respectively. The weight average molecular weight Mw of the resin was measured as being 117,000 g/mole using GPC along with a Mw/Mn (polydispersity) value of 2.01. The light transmission from a 3.2mm plaque was measured to be 90.6% at 560 nm using Lambda 950 with a 150mm integrating sphere while the haze was measured to be 0.9% using a hazemeter (Haze Gard Plus from BYK). The tensile modulus of the test sample was at 3.2GPa while the tensile strength was at 73 MPa, along with a tensile elongation of 16%.

The melt flow rate of the polymer was measured to be 2.96 g/10minutes at 230°C under 3.8kg. The spiral flow distance of 102.3_cm was obtained with the thickness of 3mm at 260°C under molding pressure of 18.3 MPa. The rupture failure time of 3mm testing samples was measured to be 244 seconds under the constant surface stress of 38MPa with 99.99% ethanol.

### Example 7. (alloy of hydrophobic pMMA copolymer, high molecular weight pMMA and SAN)V045/MW2009/SAN-70/25/5:

70wt.% of Altuglas^{®} V045 pMMA resin was blended with 25wt.% MW2009 hydrophobic pMMA and 5wt% of SAN copolymers through melt compounding at the die temperature of 210°C. V045 resin was made from pMMA/ethyl acrylate (94.6/5.4 w/w) with the weight average molecular weight of 125,000 g/mole and the polydispersity (Mw/Mn) of 2.0. Altuglas^{®} MW2009 was made from the pMMA copolymers containing tert-butyl cyclohexyl methacrylate (99/1 w/w), with the weight average molecular weight of 85,000 g/mole and its polydispersity (Mw/Mn) of 2 while SAN was made from the poly(styrene-co-acrylonitrile (64/36 w/w), with the weight average molecular weight of 205,000 g/mole and its polydispersity (Mw/Mn) of 2.38. The glass transition temperature of pMMA copolymer alloys was measured to be 109°C in N₂ using DSC at the heating rate of 10°C/minute while the Vicat temperature was detected at 110°C and 106°C under 10N and 50N, respectively. The weight average molecular weight Mw of the resin was measured as being 123,000 g/mole using GPC along with a Mw/Mn (polydispersity) value of 1.98. The light transmission from a 3.2mm plaque was measured to be 91.4% at 560 nm using Lambda 950 with a 150mm integrating sphere while the haze was measured to be 1% using a hazemeter (Haze Gard Plus from BYK). The tensile modulus of the test sample was at 3.0GPa while the tensile strength was at 71 MPa, along with a tensile elongation of 35%.

The melt flow rate of the polymer was measured to be 2.50 g/10minutes at 230°C under 3.8kg. The spiral flow distance of 99.8_cm was obtained with the thickness of 3mm at 260°C under molding pressure of 18.3 MPa. The rupture failure time of 3mm testing samples was measured to be 235 seconds under the constant surface stress of 38MPa with 99.99% ethanol.

### Example 8. (alloy of hydrophobic pMMA copolymer, high molecular weight pMMA and SAN)V045/MW2009/SAN-70/20/10:

70wt.% of Altuglas^{®} V045 pMMA resin was blended with 20wt.% MW2009 hydrophobic pMMA and 10wt% of SAN copolymers through melt compounding at the die temperature of 210°C. V045 resin was made from pMMA/ethyl acrylate (94.6/5.4 w/w) with the weight average molecular weight of 120,000 g/mole and the polydispersity (Mw/Mn) of 2.0. Altuglas^{®} MW2009 was made from the pMMA copolymers containing tert-butyl cyclohexyl methacrylate (99/1 w/w), with the weight average molecular weight of 85,000 g/mole and its polydispersity (Mw/Mn) of 2 while SAN was made from the poly(styrene-co-acrylonitrile (64/36 w/w), with the weight average molecular weight of 205,000 g/mole and its polydispersity (Mw/Mn) of 2.38. The glass transition temperature of pMMA copolymer alloys was measured to be 109°C in N₂ using DSC at the heating rate of 10°C/minute while the Vicat temperature was detected at 109°C and 105°C under 10N and 50N, respectively. The weight average molecular weight Mw of the resin was measured as being 130,000 g/mole using GPC along with a Mw/Mn (polydispersity) value of 2.0. The light transmission from a 3.2mm plaque was measured to be 91.2% at 560 nm using Lambda 950 with a 150mm integrating sphere while the haze was measured to be 1.1% using a hazemeter (Haze Gard Plus from BYK). The tensile modulus of the test sample was at 3.1GPa while the tensile strength was at 73 MPa, along with a tensile elongation of 29%.

The melt flow rate of the polymer was measured to be 2.61 g/10minutes at 230°C under 3.8kg. The spiral flow distance of 100.2_cm was obtained with the thickness of 3mm at 260°C under molding pressure of 18.3 MPa. The rupture failure time of 3mm testing samples was measured to be 449 seconds under the constant surface stress of 38MPa with 99.99% ethanol.

**Table 1**

| | Ex. 1 MW 2204 | Ex. 2 MW 2112 | Ex. 3 Q/MW 2009 (2/8) | Ex. 4 Q/MW 2112 (3/7) | Ex. 5 V045/M W2009 (95/5) | Ex. 6 V045/SAN /MW2204 (65/5/30) | Ex. 7 V045/SAN / MW2009 (70/5/25) | Ex. 8 V045/SAN / MW2009 (65/10/25 ) |
|---|---|---|---|---|---|---|---|---|
| MFR (g/10 min.) | 5.35 | 4.08 | 2.45 | 2.27 | 4.51 | 2.96 | 2.50 | 2.61 |
| Tg (°C) | 115 | 116 | 116 | 115 | 113 | 109 | 109 | 109 |
| Vicat (°C) in 10N | 116 | 116 | 117 | 115 | 117 | 111 | 110 | 109 |
| Vicat (°C) in 50N | 112 | 112 | 112 | 111 | 113 | 106 | 106 | 105 |
| Mw (g/mole) | 82,000 | 86,000 | 102,000 | 117,000 | 99,000 | 117,000 | 123,000 | 130,000 |
| Mw/Mn | 1.85 | 2.1 | 2.07 | 2.46 | 1.92 | 2.01 | 1.98 | 2.0 |
| LT(%) | 92.2 | 92.3 | 92.1 | 92.1 | 90.6 | 90.6 | 91.4 | 91.2 |
| Haze (%) | 0.6 | 0.6 | 0.5 | 0.8 | 0.9 | 0.9 | 1.0 | 1.1 |
| Tensile modulus (GPa) | 3.2 | 3.2 | 3.2 | 3.1 | 3.2 | 3.2 | 3.0 | 3.1 |
| Tensile strength (MPa) | 75 | 73 | 76 | 75 | 75 | 73 | 71 | 73 |
| Tensile elongatio n (%) | 10 | 12 | 20 | 16 | 8 | 16 | 35 | 29 |
| Spiral flow length (cm)@26 0°C | 108.9 | 108.1 | 102.7 | 102.0 | 108.4 | 102.3 | 99.8 | 100.2 |
| Rupture time at 38MPa (sec.) w. ethanol | 12 | 14 | 40 | 55 | 18 | 244 | 235 | 449 |

**TABLE 2: Comparative examples**

| | Comp. Ex.1 (V825T-C211) | Comp. Ex.2 (V920T) | Comp. Ex.3 (V045) | Comp. Ex.4 (Q-Clean) | Comp. Ex.5 (SAN) | Comp. Ex. 6 MW2009 |
|---|---|---|---|---|---|---|
| MFR (g/10 min.) | 3.09 | 7.27 | 2.01 | 0.64 | 7.25 | 3.75 |
| Tg (°C) | 114 | 107 | 107 | 111 | 106 | 117 |
| Vicat (°C) in 10N | 115 | 107 | 107 | 112 | 107 | 117 |
| Vicat (°C) in 50N | 108 | 100 | 100 | 107 | 101 | 113 |
| Mw (g/mole) | 98,000 | 85,000 | 120,000 | 150,000 | 205,000 | 85,000 |
| Mw/Mn | 1.85 | 1.95 | 1.95 | 2.01 | 2.38 | 1.89 |
| LT(%) | 92.3 | 92.3 | 92.3 | 92.3 | 90.1 | 92.3 |
| Haze (%) | 0.4 | 0.4 | 0.4 | 0.4 | 0.8 | 0.6 |
| Tensile modulus (GPa) | 3.1 | 3.1 | 3.1 | 3.1 | 3.4 | 3.2 |
| Tensile strength (MPa) | 75 | 69 | 72 | 71 | 72 | 70 |
| Tensile elongation (%) | 12 | 7 | 15 | 34 | 5 | 10 |
| Spiral flow length (cm)@260C° | 100.5 | 109.4 | 95.5 | 79.6 | 104.2 | 105 |
| Rupture time at 38MPa (sec.) w. ethanol | 23 | 8 | 397 | >900 | >900 | 15 |

**Comparative Example 1.** Altuglas^{®} V825T pMMA copolymer was confirmed using ¹H NMR to possess the composition of pMMA/ethyl acrylate (99.4/0.6 w/w). The glass transition temperature of V825T resin was measured to be 115°C in N₂ using DSC at the heating rate of 10°C/minute while the Vicat temperature was detected at 114°C and 108°C under 10N and 50N, respectively. The weight average molecular weight Mw of the resin was measured as being 98,000 g/mole using GPC along with a Mw/Mn (polydispersity) value of 1.87. The light transmission from a 3.2mm plaque was measured to be 92.3% at 560 nm using Lambda 950 with a 150mm integrating sphere while the haze was measured to be 0.4% using a hazemeter (Haze Gard Plus from BYK). The tensile modulus of the test sample was at 3.1GPa while the tensile strength was at 75 MPa, along with a tensile elongation of 12%.

The melt flow rate of the polymer was measured to be 2.69 g/10minutes at 230°C under 3.8kg. The spiral flow distance of 100.6_cm was obtained with the thickness of 3mm at 260°C ^{C} under molding pressure of 18.3 MPa. The rupture failure time of 3mm testing samples was measured to be 23 seconds under the constant surface stress of 38MPa with 99.99% ethanol.

**Comparative Example 2.** Altuglas^{®} V920T pMMA copolymer was confirmed using ¹H NMR to possess the composition of pMMA/ethyl acrylate (94.4/5.4 w/w). The glass transition temperature of V920T resin was measured to be 107°C in N₂ using DSC at the heating rate of 10°C/minute while the Vicat temperature was detected at 107°C and 100°C under 10N and 50N, respectively. The weight average molecular weight Mw of the resin was measured as being 85,000 g/mole using GPC along with a Mw/Mn (polydispersity) value of 1.95. The light transmission from a 3.2mm plaque was measured to be 92.3% at 560 nm using Lambda 950 with a 150mm integrating sphere while the haze was measured to be 0.4% using a hazemeter (Haze Gard Plus from BYK). The tensile modulus of the test sample was at 3.1GPa while the tensile strength was at 65 MPa, along with a tensile elongation of 7%.

The melt flow rate of the polymer was measured to be 7.27 g/10minutes at 230°C under 3.8kg. The spiral flow distance of 109.4_cm was obtained with the thickness of 3mm at 206°C under molding pressure of 18.3 MPa. The rupture failure time of 3mm testing samples was measured to be 8 seconds under the constant surface stress of 38MPa with 99.99% ethanol.

**Comparative Example 3.** Plexiglas^{®} V045 pMMA copolymer was confirmed using ¹H NMR to possess the composition of pMMA/ethyl acrylate (94.4/5.4 w/w). The glass transition temperature of V045 resin was measured to be 107°C in N₂ using DSC at the heating rate of 10°C/minute while the Vicat temperature was detected at 107°C and 100°C under 10N and 50N, respectively. The weight average molecular weight Mw of the resin was measured as being 120,000 g/mole using GPC along with a Mw/Mn (polydispersity) value of 1.95. The light transmission from a 3.2mm plaque was measured to be 92.3% at 560 nm using Lambda 950 with a 150mm integrating sphere while the haze was measured to be 0.4% using a hazemeter (Haze Gard Plus from BYK). The tensile modulus of the test sample was at 3.1GPa while the tensile strength was at 72 MPa, along with a tensile elongation of 15%.

The melt flow rate of the polymer was measured to be 2.01 g/10minutes at 230°C under 3.8kg. The spiral flow distance of 95.5_cm was obtained with the thickness of 3mm at 260°C under molding pressure of 18.3 MPa. The rupture failure time of 3mm testing samples was measured to be 397 seconds under the constant surface stress of 38MPa with 99.99% ethanol.

**Comparative Example 4.** Plexiglas^{®} Q-Clean pMMA copolymer was confirmed using ¹H NMR to possess the composition of pMMA/ethyl acrylate (97/3 w/w). The glass transition temperature of Plexiglas^{®} Q-Clean resin was measured to be 110°C in N₂ using DSC at the heating rate of 10°C/minute while the Vicat temperature was detected at 110°C and 107°C under 10N and 50N, respectively. The weight average molecular weight Mw of the resin was measured as being 150,000 g/mole using GPC along with a Mw/Mn (polydispersity) value of 2.0. The light transmission from a 3.2mm plaque was measured to be 92.3% at 560 nm using Lambda 950 with a 150mm integrating sphere while the haze was measured to be 0.4% using a hazemeter (Haze Gard Plus from BYK). The tensile modulus of the test sample was at 3.1GPa while the tensile strength was at 71 MPa, along with a tensile elongation of 30%.

The melt flow rate of the polymer was measured to be 0.64 g/10minutes at 230°C under 3.8kg. The spiral flow distance of 79.6_cm was obtained with the thickness of 3mm at 260C under molding pressure of 18.3 MPa. The rupture failure time of 3mm testing samples was measured to be >900 seconds under the constant surface stress of 38MPa with 99.99% ethanol.

**Comparative Example 5.** Ineos SAN copolymer was confirmed using ¹H NMR to possess the composition of poly(styrene-co-acrylonitrile (64/36 w/w). The glass transition temperature of SAN resin was measured to be 106°C in N₂ using DSC at the heating rate of 10°C/minute while the Vicat temperature was detected at 107°C and 101°C under 10N and 50N, respectively. The weight average molecular weight Mw of the resin was measured as being 205,000 g/mole using GPC along with a Mw/Mn (polydispersity) value of 2.38. The light transmission from a 3.2mm plaque was measured to be 90.1% at 560 nm using Lambda 950 with a 150mm integrating sphere while the haze was measured to be 0.8% using a hazemeter (Haze Gard Plus from BYK). The tensile modulus of the test sample was at 3.4GPa while the tensile strength was at 72 MPa, along with a tensile elongation of 5%.

The melt flow rate of the polymer was measured to be 7.25 g/10minutes at 230°C under 3.8kg. The spiral flow distance of 104.2 cm was obtained with the thickness of 3mm at 260C under molding pressure of 18.3 MPa. The rupture failure time of 3mm testing samples was measured to be >900 seconds under the constant surface stress of 38MPa with 99.99% ethanol.

**Comparable example 6.** (pMMA copolymer MW2009 containing 1.0% tert-butyl cyclohexyl methacrylate with Tg=~117°C). This example demonstrates the preparation of a high molecular weight copolymer of methyl methacrylate and tert-butyl cyclohexyl methacrylate (having a 62% trans/38% cis isomer ratio). The melt flow rate of the polymer was measured to be 3.75 g/10minutes at 230°C under 3.8kg.

The resulting polymer was confirmed using ¹H NMR to possess the composition of pMMA/ tert-butyl cyclohexyl methacrylate (99.0/1.0w/w). The syndiotacticity of the copolymer was determined at 50% from the chemical shift of 44.5ppm using ¹³C NMR while the isotaticity and atacticity were measured at 8% and 42% from 45.5ppm and 45.0ppm. The glass transition temperature of the resin was measured to be 117°C in N₂ using DSC at the heating rate of 10°C/minute. Vicat softening temperatures were detected at 117°C and 113°C under 10N and 50N after samples being annealed at 100°C for 16 hours. The weight average molecular weight Mw of the resin was measured as being 85,000 g/mole using GPC along with a Mw/Mn (polydispersity) value of 1.89. The light transmission from a 3.2mm plaque was measured to be 92.3% at 560 nm using Lambda 950 with a 150mm integrating sphere while the haze was measured to be 0.5% using a hazemeter (Haze Gard Plus from BYK). The tensile modulus of the test sample was at 3.2GPa while the tensile strength was at 70 MPa, along with the tensile elongation of 10%. The spiral flow distance of 105_cm was obtained with the thickness of 3mm at 260°C under molding pressure of 18.3 MPa. The rupture failure time of 3mm testing samples was measured to be 15 seconds under the constant surface stress of 38MPa with 99.99% ethanol.

### EXAMPLES SUMMARY:

As can be seen from the Examples, the compositions having hydrophobic pMMA, high MW pMMA, and SAN provide a better chemical resistance (to ethanol) compared to Examples without SAN or without the high MW pMMA, without any significant loss of high optical performance/clarity (w. high LT>90% and haze <3%).

## Claims

1. An acrylic alloy composition, comprising:
a) from 5 to 99.8, preferably from 10 to 80, most preferably from 15 to 60 percent by weight of a hydrophobic acrylic copolymer comprising:
1) from 0.1 to 20, preferably 0.3 to 10, more preferably from 0.5 to 5 weight percent monomer units chosen from tert-butyl cyclohexyl methacrylate, 3,3,5-trimethylcyclohexyl(meth)acrylate, and a mixture thereof;
2) from 50 to 80 weight percent methyl methacrylate monomer units;
3) optionally from 0 to 49.9 weight percent of other monomer units copolymerizable with methyl methacrylate;
the percent based on the total monomer in the hydrophobic acrylic copolymer, wherein said copolymer has a Tg of from 114°C to 135°C, preferably from 115°C to 130°C, and more preferably from 117°C to 125°C;
b) optionally other (meth)acrylic polymers;
c) from 0.2 to 30, preferably 1-15, most preferably 1-7 weight percent of at least one copolymer selected from the group consisting of styrene/acrylonitrile copolymer (SAN) and acrylonitrile/styrene/acrylate (ASA) copolymer.
the percentages of polymers a), b) and c) in the alloy adding to 100%.

2. The acrylic alloy composition of claim 1, wherein said other (meth)acrylic polymer comprise from 30 to 94.8 weight percent of the polymers in the alloy composition.

3. The acrylic alloy composition of any of claims 1 and 2, wherein said composition further comprises from 5 to 50 weight percent, preferably 10 to 40 weight percent more preferably 20 to 45 weight percent, of impact modifiers, based on total polymers in the composition.

4. The acrylic alloy composition of any of claims 1 to 3, wherein said tert-butyl cyclohexyl (meth)acrylate, and/or 3,3,5-trimethylcyclohexyl(meth)acrylate monomer units have a trans/cis ratio of from 30/70 to 97/3, more preferably from 40-60 to 80/20, and most preferably from 50/50 to 75/25.

5. The acrylic alloy composition of any of claims 1 to 4, wherein said optional other monomer units copolymerizable with methyl methacrylate comprise from 0.01 to 25 weight percent of a high Tg comonomer, selected from the group consisting of methacrylic acid, acrylic acid, itaconic acid, alpha methyl styrene, maleic anhydride, maleimide, isobornyl methacrylate, norbornyl methacrylate, t-butyl methacrylate, cyclohexyl methacrylate, acrylamide and methacrylamide, and mixtures thereof.

6. The acrylic alloy composition of any of claims 1 to 5, wherein said optional other monomer units copolymerizable with methyl methacrylate comprise from 0.01 to 6 weight percent of methacrylic acid, preferably 0.1 to 4 weight percent, more preferably 0.5 to 3 weight percent of methacrylic acid.

7. The acrylic alloy composition of any of claims 1 to 6, wherein said hydrophobic acrylic copolymer has a weight average molecular weight of from 55,000 g/mole to 250,000 g/mole, preferably from 70,000 g/mole to 200,000 g/mole, more preferably from greater than 85,000 g/mole to 200,000 g/mole.

8. The acrylic alloy composition of any of claims 1 to 7, wherein said SAN polymer has a weight average molecular weight of greater than 150,000 g/mol, preferably greater than 175,000 g/mol, and more preferably greater than 200,000 g/mol.

9. The acrylic alloy composition of claim 3, wherein said impact modifier is selected from the group consisting of a core-shell polymer with a volume average particle diameter of 100 to 300 nm, an acrylic block copolymer, and a self-assembling, nanostructured polymer.

10. The acrylic alloy composition of claim 9, wherein said impact modifier is a blend of 1-20 weight percent of a self-assembling , nanostructured polymer, and 5 to 40 weight percent of one or more core-shell impact modifiers.

11. The acrylic alloy composition of any of claims 1 to 10, wherein said composition is optically clear, having a TWLT of at least 89%, preferably at least 90% and more preferably at least 91%; and an optical haze of less than 4%, preferably less than 3% and most preferably less than 2%, as measured on a 3.2 mm thick plaque, using ASTM method D1003.

12. The acrylic alloy composition of any of claims 1 to 11, wherein said copolymer has a refractive index of 1.47-1.50 at the wavelength of 589 nm.

13. The acrylic alloy composition of any of claims 1 to 12, wherein said composition further comprises one or more other compatible polymers, preferably a copolymer of poly(methyl (meth)acrylate/ethyl (meth)acrylate).

14. The acrylic alloy composition of any of claims 1 to 13, further comprising 50 to 3500 ppm of one or more antioxidants, based on the weight of the polymer solids.

15. An article comprising the acrylic alloy composition of claims 1 to 14, wherein said article is selected form the group consisting of automotive front lenses, thin wall parts, lighting pipes, solar back sheets, protecting films in cell phone back covers, optical lenses, optical films for displays/electronics, medical applications, films in signage, building and construction, electric vehicle (EV) charging stations, thermo-formable sheets, injection molded parts, extruded surface layers, (co-)extruded sheets and profiles, and composites.
